# EUROPEAN PATENT APPLICATION

(11) **EP 4 501 538 A1**
(43) Date of publication of application: **05.02.2025**
(21) Application number: 24191188.2
(22) Date of filing: 26.07.2024
(51) Int. Cl.: B24B 9/10, B24B 49/10, G05B 19/401, C03B 33/03, C03B 33/02, G05B 19/409

(54) **MACHINING CENTER AND METHOD FOR SLABS**

(30) Priority: 02.08.2023 IT 202300016491
(71) Applicant: C.M.S. S.p.A., 24019 Zogno (BG) (IT)
(72) Inventor: BIGOZZI, Emiliano, 61032 Fano (PU) (IT)
(74) Representative: Luppi Intellectual Property S.r.l.

(57) **Abstract**

A method and a machining centre for machining slabs are disclosed, with a vertically movable machining unit, a path for moving a slab to the machining unit, a detection unit that comprises a mechanical feeler that receives in contact at least one edge of the slab, an arm that carries the mechanical feeler and rotates pushed by the moving slab, a servo motor with a rotor connected to the arm and a servo drive for controlling the servo motor, in which a feedback sensor of the servo drive sends signals used to detect features of the slab before performing machining with the machining unit.

## Description

### Background of the invention

The invention relates to a machining method and a machining centre for machining slabs, in particular for performing grinding on the edges of a slab. The machining centre may comprise, in particular, a vertical machining centre in which the slab being machined is movable in a longitudinal horizontal direction (axis X) whilst the machining unit is movable in a vertical direction (axis Y) along a linear guide arranged on a support. It is possible to provide at least one third axis controlled in a transverse horizontal direction (axis Z).

Specifically but not exclusively, the invention can be applied to machining glass slabs, for example float glass or laminated glass, in particular to form an origin sensor function, i.e. to detect a corresponding position of the slab with respect to the machining unit that will perform machining, and/or to perform a quality control function in real time of a machined slab, and/or to perform a function of calibration of the machining centre that is usable, for example, after replacing a component of the machining centre.

The prior art comprises origin sensors for vertical machines, in particular for vertical grinders, in which a slab arranged vertically (where a slab arranged "vertically" in this description means that the slab is arranged exactly or almost vertically, i.e. with a possible slight obliquity so as to promote the stability of the slab) is moved along a horizontal roller conveyor until the front edge of the slab stops against a reference in a known fixed position.

This operation enables "resetting" of the position of the slab to be ascertained in order to provide the machining origin, i.e. determine a corresponding precise position of the edge of the slab with respect to the machining unit (in particular, with respect to the spindle) that has to perform the machining (grinding) of the edge. It is known to arrange the reference (for example an element of the wheel type) on a movable member of a pneumatic linear actuator to enable the reference to be moved, after determining the "zero" position, and the subsequent engagement of the slab with a suction conveyor that will transfer the slab to the machining unit.

In practice, after the slab has come to abut and resetting has been performed, the suction conveyor intervenes to stop the slab; after this, the reference is retracted by the pneumatic actuator to free the path so that the suction conveyor can transfer the slab to the machining zone.

Various aspects of the prior art are improvable.

Firstly, it is desirable to speed up the operation of determining the position of the slab. Secondly, it is desirable to reduce the risk of damage to the slab due to the impact against the reference. Other improvable aspects of the prior art are the reduction of wear to the reference feeler, increasing the precision of the position of the slab, the repeatability of the reference position of the feeler. Further, it would be advantageous to succeed in detecting in real time and with relatively great precision greater information on the shape and arrangement of the front edge, or of other edges, of the slab.

### Summary of the invention

One object of the invention is to overcome one or more of the aforesaid limits and drawbacks of the prior art.

One object of the invention is to provide an alternative solution to the problem of devising an origin sensor for machining a slab.

One object of the invention is to permit effective and precise calibration of a machining centre for machining slabs.

One object of the invention is to perform quality control in real time of a machined slab in a vertical machining centre.

One advantage is to devise a vertical grinding machine that is constructionally cheap and simple and is highly flexible and versatile that is able to adapt easily and practically to different shapes (so-called as-built shapes) of the slabs to be made.

One advantage is enabling not only rectangular slabs but also slabs of more complex shape to be machined.

Such objects and advantages, and still others, are achieved by a method or a machining centre according to one or more of the claims set out below.

In one embodiment, a machining centre comprises a machining unit that is movable at least vertically, a path for moving a slab to the machining unit, a detection unit that comprises a mechanical feeler that can receive in contact at least one edge of the slab, an arm that carries the mechanical feeler and that can rotate pushed by the moving slab, a servo motor with a rotor connected to the feeler arm and a servo drive for controlling the servo motor, in which a feedback sensor of the servo drive sends signals used to detect at least one feature of the slab, before performing machining with the machining unit.

It is observed that using a mechanical feeler is advantageous because this type of feeler is particularly robust and effective, above all in an extremely dirty environment, like that of wet machining. The mechanical feeler may comprise, in particular, a wheel feeler.

Using a servo motor with a feedback sensor (for example, an encoder) permits active and precise control of position and/or torque for a complete revolution of 360° of the drive rotor of the arm that carries the feeler.

Using a servo drive enables the force of contact between the slab and the feeler to be adjusted. Owing to the servo drive, this force of contact may be insignificant, without however penalizing the advancement speed of the slab during detection. The servo drive may comprise, in particular, at least one servo loop for speed control. The servo drive may comprise, in particular, at least one servo loop for torque control. The servo drive may comprise, in particular, at least one servo loop for position control. The servo drive may comprise, in particular, at least two servo loops for torque control and position control. The servo drive may comprise, in particular, at least three servo loops for torque control, position control and speed control.

The servo motor comprises a rotary motor. The servo motor may comprise, in particular, a rotor with a rotation axis that is coaxial with the rotation axis of the feeler arm. The axis of the rotor may be connected to the rotation axis of the feeler arm in direct contact with a 1:1 transmission ratio.

The servo motor may comprise, in particular, a brushless motor (as in the illustrated embodiments), a motor with brushes, a direct current motor, an alternating current motor, or still other types of motor. The feedback sensor may comprise, in particular, an encoder (as in the illustrated embodiments), a Hall effect sensor, a potentiometer, a revolution counter, a resolver, etc. The servo drive is connected to a controller that sends a control signal. The controller may comprise, in particular, the numerical control of a CNC machining centre (as in the illustrated embodiments), a PLC, a movement controller, etc.

With the machining method and/or the machining centre in question, it is possible to perform not only the "resetting" operation, i.e. defining an initial relative position of the slab with respect to the machining unit (spindle), but also the operation of determining an actual profile of at least one edge of the slab (for example, a profile obtained by an analysis of the linear regression performed on a set of points detected by the feedback sensor of the servo drive).

An operation of automatic calibration operation of one or more operating components or parameters of the machining centre is moreover possible by detecting the geometric features of a sample slab processed in the machining centre, in particular to measure (linear and/or angular) offsets with respect to the machining unit, for example with respect to a reference point (centre) of the spindle.

One advantage is thus the possibility of performing a cycle of automatic calibration of the parameters of the machining centre.

The servo drive moreover enables measuring to be started (detecting the signals sent by the feedback sensor) after the feeler has started moving under the thrust of the moving slab, i.e. after a slight "yielding" of the feeler, without altering the precision of the measurement.

This possibility of "yielding" of the feeler, i.e. of triggering the measuring not immediately but just after the contact between the slab and the feeler, permits working with a relatively reduced force of contact, with less wear to the feeler as a result (in particular to the rubber stop element of the feeler), and a lower risk of damage to the slab.

The servo drive further enables a machined slab quality control function to be performed, as it is possible to detect, by mechanical feeling, one or more edges of the slab after machining (grinding), for example by retracting the slab from the machining unit to the feeler, so as to detect possible machining faults and propose (or automatically implement) corrections.

It is further possible to arrange the detection unit on a movable conveying unit to perform a scanning function for scanning the shape of the slab (on a part or also on all or almost all the perimeter of the slab). The conveying unit that carries the detection unit may be, in particular, movable on a vertical guide (for example on the same support on which the machining unit is vertically slidable).

The movement of the conveying unit may be controlled by the numerical control of the CNC machining centre, for example on the basis of information received from the numerical control and relating to the (at least partial) shape of the slab.

One advantage is the possibility of operating, in particular automatically running, the "resetting" operation (i.e. referring to position of the slab with respect to the machining unit), also in a machining centre without motor-driven roller conveyor.

The machining centre may comprise, in particular, a calculation unit configured to process the signals sent by the feedback sensor so as to determine at least one feature of the slab, for example the position of the slab with respect to the machining unit and/or the shape of the edge/s of the slab. The calculation unit could determine, in particular, the profile of the shape of the slab (before machining and/or after machining) by means of a regression analysis of the various points defined by the feedback sensor. It is possible, in particular, to perform a regression analysis and determine the feature of the slab knowing the position of the centre of rotation of the feeler arm and the dimension of the range of the arm and of the wheel of the feeler. It is possible to determine the profile of the edge of the slab putting it into relation with the rotation induced on the arm by the edge. For this purpose, it is possible to detect, by the feedback sensor, a number of values of the angular movement of the arm and from these detected values it will be possible to construct, by interpolation, the profile of the edge (for example, a straight line or a curve in the case of a curvilinear profile of the edge). It is in particular possible to plot the front profile of the slab and intersect this profile with the support plane of the slab and thus find a point that may be considered to be a "zero" reference point to perform the machining task.

### Brief description of the drawings

The invention may be better understood and implemented with reference to the enclosed drawings that illustrate embodiments thereof by way of non-limiting example, in which:

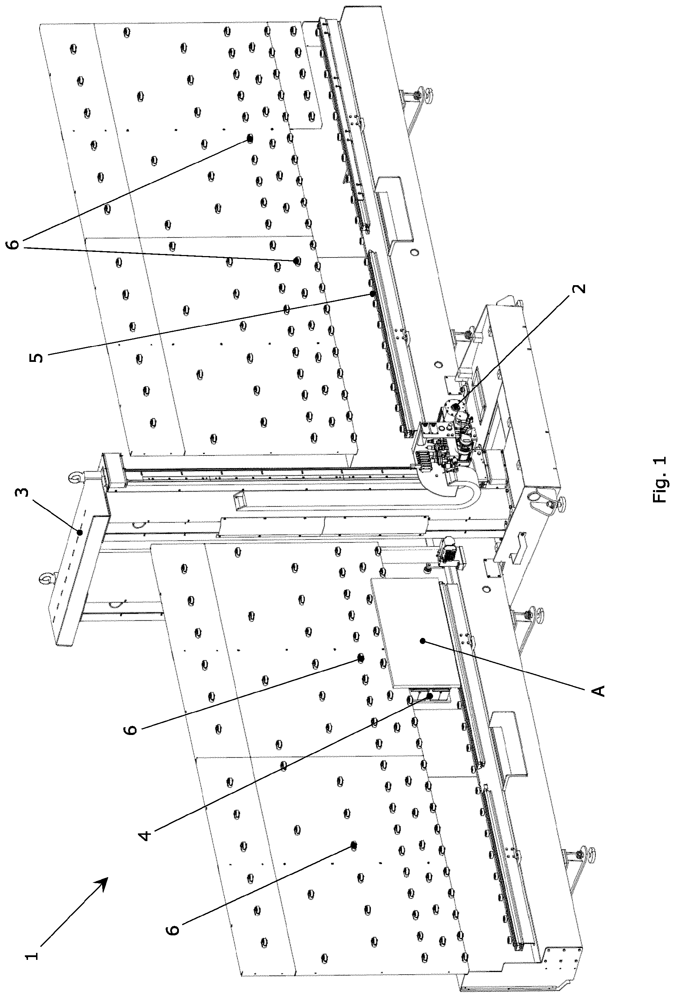

Figure 1 is a perspective view of a first embodiment of a vertical machining centre made according to the present embodiment;
Figure 2 shows an enlarged detail of Figure 1, wherein a slab is visible that is intended for machining in a first step of an embodiment of a machining method, actuated according to the present embodiment, in which the slab is about to meet a feeler of a slab-detection unit;
Figures 3 to 10 show some steps in sequence of the aforesaid machining method, which are subsequent to the step illustrated in Figure 2, in which the slab is detected by the detection unit in order to then be machined;
Figure 11 shows some schematic views, in a vertical elevation, of the steps in sequence from (1) to (8) of a machining method actuated by a second embodiment of a vertical machining centre, according to the present embodiment;
Figures 12-15 show, in sequence, steps (09) to (32) that are subsequent to steps (1) to (8) shown in Figure 11.

### Detailed description

With reference to the aforesaid figures, it is noted that, for the sake of greater simplicity and clarity of expression, identical elements of different embodiments are indicated by the same numbering.

With 1, a machining centre has been indicated overall for machining slabs, in particular for machining glass slabs. The machining centre may comprise, in particular, a CNC machining centre.

The machining centre 1 may comprise, in particular, a machining unit 2 configured to perform removal of material on a slab A. The machining centre 1 may comprise, in particular, a machining unit 2 configured to perform grinding on the edges of a slab A. In the illustrated embodiments, the machining unit 2 comprises a vertical grinder.

The machining centre 1 may comprise, in particular, a vertical machining centre in which the slab A is moved in a longitudinal horizontal direction (axis X) whilst the machining unit 2 is movable at least in a vertical direction (axis Y) along a linear guide arranged on a support 3. In the illustrated embodiments, the machining unit 2 is movable along a fixed support 3 extending in a vertical direction. It is possible to provide at least one third axis controlled in a transverse horizontal direction (axis Z).

The machining centre 1 comprises a path configured to move a slab A arranged vertically in a horizontal direction of advance to the machining unit 2. The path may be provided, in particular, with a conveyor 4 configured to grasp a slab arranged vertically and move the slab in a horizontal direction. The conveyor 4 may comprise, in particular, a vacuum conveyor. The conveyor 4 may comprise, in particular, at least two carriages each of which is movable by the numerical control in a horizontal longitudinal direction. Each carriage may carry one or more suction cups (in the specific case, one pair of suction cups for each carriage).

The path may comprise, in particular, a horizontal roller conveyor 5 to enable a slab A arranged vertically (i.e. in an exactly vertical position or, in general, in a slightly oblique position to promote the stability of the slab) to slide in a horizontal direction. It is possible for the slab A to slide on the roller conveyor 5 resting on its own lower edge. The path may comprise, in particular, a plurality of rolling elements 6 arranged on a vertical plane for contact with a face of the slab A arranged vertically.

The machining centre 1 comprises a slab-detection unit configured to perform at least one origin sensor function, i.e., to detect a relative position of the slab A with respect to the machining unit 2 that will perform the machining task.

The slab-detection unit comprises a mechanical feeler 7 arranged along the path of the slab to come into contact with a slab moving along the aforesaid path. The mechanical feeler 7 may comprise, in particular, at least one wheel (in particular, one rubber-coated wheel) for contact with an edge of the slab.

The slab-detection unit comprises an arm 8 that carries the mechanical feeler 7 and is rotatable with the possibility of rotation (in particular in both directions of rotation) by 360° or by more than 360° (also with rotation by several complete revolutions, in a substantially unlimited manner, in particular in both directions of rotation) around a rotation axis (in particular horizontal rotation axis).

The slab-detection unit comprises a servo motor 9 with a rotor and a feedback sensor. The rotor is arranged for rotating the arm 8. The slab-detection unit comprises a servo drive for controlling the servo motor 9. The rotor of the servo motor 9 may be, in particular, coaxial (in particular, engage directly) with the rotation axis of the feeler arm 8.

The servo drive may be configured, in particular, to control the position and torque of the servo motor 9 so as to adopt a waiting configuration to wait for a moving slab. In the waiting configuration the mechanical feeler 7, which is carried by the arm 8, stays in place by virtue of the control of the position of the servo drive. The servo drive may be programmed, in particular, to so control the torque of the rotor that it does not exceed a set torque so that, when the moving slab knocks against the mechanical feeler 7, it may push on the mechanical feeler 7 with sufficient force to rotate the arm 8, maintaining contact between the moving slab A and the mechanical feeler 7. This force of contact on the mechanical feeler 7 may be much reduced precisely by virtue of the torque control actuated owing to the servo drive.

The machining centre 1 may comprise, in particular, a calculation unit configured to process signals received from the feedback sensor so as to determine at least one feature of the slab A in contact with the mechanical feeler 7. The feature that is determined may comprise, in particular, at least one position of the slab A in contact with the mechanical feeler 7.

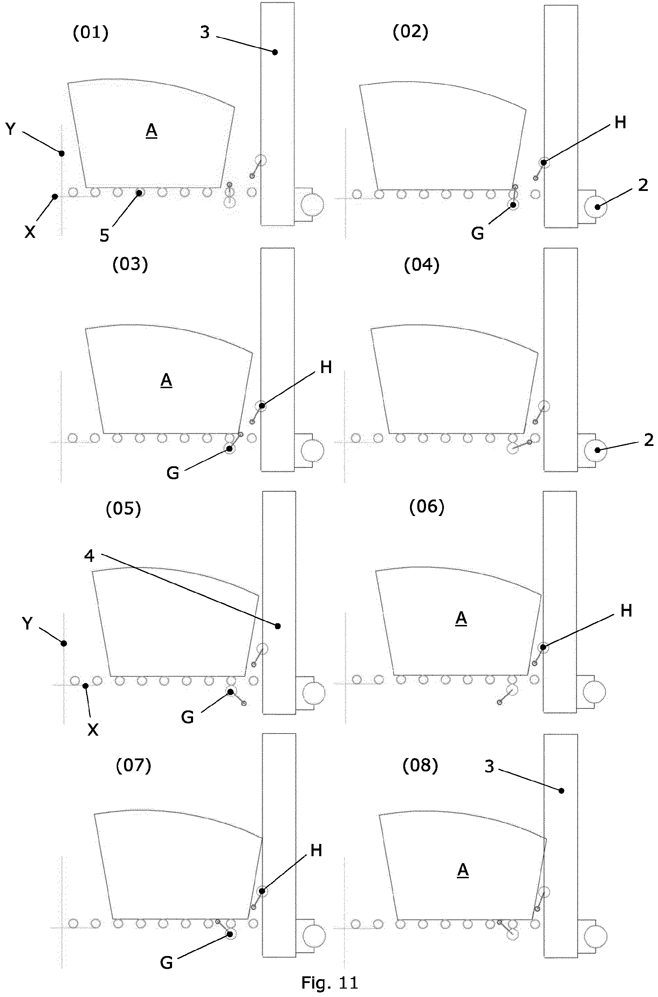

It is possible to provide embodiments (like, for example, the embodiment illustrated in Figures 11-15) in which the slab-detection unit is arranged on a conveying unit (not illustrated, for example a sliding unit like a slide or a carriage) which may be moved along at least one machining axis controlled by a numerical control (in particular, the numerical control of the machining centre 1). The controlled machining axis may comprise, in particular, a vertical axis.

It is possible to provide embodiments (like, for example, the embodiment illustrated in Figures 11-15) in which the machining centre 1 comprises two or more slab detection units, at least one of which is arranged on a conveying unit.

The machining centre 1 may comprise, in particular, a numerical control configured to perform at least one machining method in which at least one slab-detection unit is used.

According to one embodiment of the machining method, the moving slab A meets the mechanical feeler 7 and pushes the mechanical feeler 7, maintaining contact with the feeler so as to rotate the revolving arm 8 on which the mechanical feeler is arranged 7. The arm 8 is connected to the rotor of the servo motor 9 that, as said, is controlled by the servo drive.

The feedback sensor, which is connected to the rotor of the servo motor 9, sends signals which are used to detect at least one feature of the slab, in particular at least one position of the slab with reference to the position of the machining unit 2 (in particular, of the spindle of the vertical grinding machine).

It is in particular possible to ensure that, when the slab A meets the mechanical feeler 7, the slab is moving, is in particular moved by the conveyor 4 that keeps the slab grasped and the servo drive controls the servo motor 9 with a position control to keep the mechanical feeler 7 stationary in a waiting state before meeting with the slab A. The servo drive is configured with a torque control for acting on the rotor with a torque that cannot exceed a set torque value, so that the force of contact that will be generated between the mechanical feeler 7 and the moving slab will be moderate.

After the slab A has met the mechanical feeler 7, the slab continues its movement in contact with the mechanical feeler 7 and pushes the mechanical feeler 7 causing a rotation of the revolving arm 8 and of the rotor connected to the arm, after which the signals of the feedback sensor supply a plurality of angular position values of the rotor that are used, knowing the conformation and arrangement of the arm 8 and of the mechanical feeler 7, to determine a position and/or profile of a front edge of the slab, where "front" is understood to refer to a direction of advance of the slab A.

The calculation unit, to perform the aforesaid determination of position and/or profile, may use, together with the angular position values of the rotor, also the position values of other movement-controlled axes, like, for example, the position of the conveyor that moves the slab A and/or the conveying unit (if present) that moves the detection unit.

It is in particular possible to exclude detecting the lower part of the front edge of the slab A, near the lower corner, as there could be an imperfection in that zone (for example, a chip).

The feature of the slab A may be determined, in particular, by means of regression analysis. In particular, it is possible to use robust regression analysis to obtain great precision even in the case of slab tolerance errors (see, in particular, shape errors due to cutting or shearing imperfections).

In particular, it is possible to use the angular position values of the rotor (detected by the feedback sensor) to determine the profile of the front edge of the slab A, after the rotor has performed a given rotation, i.e., without considering the angular position values of the rotor measured in an initial step of the angular movement of the feeler arm 8.

The possibility of this measuring delay, with the yield of the feeler arm, does not alter the precision of the origin sensor function and, at the same time, lessens the stiffness of the measuring system and permits a reduced force of contact and resulting low wear to the feeler.

It is in particular possible to provide (after detecting the front edge of the slab) for the arm 8 to be rotated by the servo drive as far as the contact of the mechanical feeler 7 with a lower edge of the slab A, to determine a position and/or profile of the lower edge based on signals from the feedback sensor.

It is in particular possible to ensure that when the slab-detection unit is arranged on a conveying unit (slide or carriage), the conveying unit is moved along the machining axis controlled during the contact between the slab A and the mechanical feeler 7. In particular, the conveying unit may be so moved that the mechanical feeler 7 comes into contact with two or more edges or sides of the slab A, for example first with the front edge, then with the upper edge, then with the rear edge, then with the lower edge of the slab. Depending on needs and/or on the chosen machining method, it is possible for the mechanical feeler 7 to come into contact with just one of the aforesaid edges, or with two edges, or with three edges, in any possible combination.

Alternatively, or in addition to the machining method disclosed above with origin sensor function, it is possible to provide a machining method in which quality control of a slab A that has just been processed in the machining centre 1 is carried out.

Quality control may comprise, in particular, the steps of feeding a raw slab by a conveyor (in particular, the conveyor 4) and of removing material from the edges of the raw slab by a machining unit (in particular, the machining unit 2) to obtain a machined slab. Quality control may comprise, in particular, the steps of moving the machined slab, in particular making it go backwards, still engaged by the conveyor, and of detecting an actual profile of the machined slab by the slab-detection unit.

It is possible to provide, alternatively or in addition to the work methods described above with an origin sensor function and/or quality control function, a machining method in which a calibration of one or more components or parameters of the machining centre 1 is performed. Calibration may be used, in particular, after replacing a component of the machining centre (for example, the wheel of the mechanical feeler 7 or the servo motor 9).

Calibrating the machining centre 1 may comprise, in particular, the steps of defining a slab shape (for example, rectangular with set dimensions) and feeding by the conveyor 4 a raw slab with excess material on the edges with respect to the aforesaid defined slab shape.

Calibrating the machining centre 1 may comprise, in particular, the steps of removing material on the edges of the raw slab by the machining unit 2 to obtain a machined slab of known dimensions (for example, the aforesaid set dimensions of the rectangular shape), and of moving the machined slab, in particular making it go backwards, still engaged by the conveyor 4, to the slab-detection unit to perform slab detection.

Calibrating the machining centre may comprise, in particular, the step of detecting the machined slab (of known dimensions), in particular of detecting at least two edges of the slab, by the slab-detection unit using the contact with the mechanical feeler 7 and the signals sent by the feedback sensor connected to the rotor. Detecting the slab, together with the fact that the dimensions of the slab are known, enables one or more components or parameters of the machining centre 1 to be calibrated, for example enables the actual position of the machining unit 2 to be determined, in particular by knowing the relative position between the slab-detection unit and the machining unit 2.

Each of the three aforesaid work modes (machining origin sensor, quality control of the machined slab and calibration of the machining centre) may also be performed independently of the other two, in particular it is possible to configure the machining centre so as to be able to run all three of the aforesaid modes, or only (any) one of the modes, or also only (any) two of the modes.

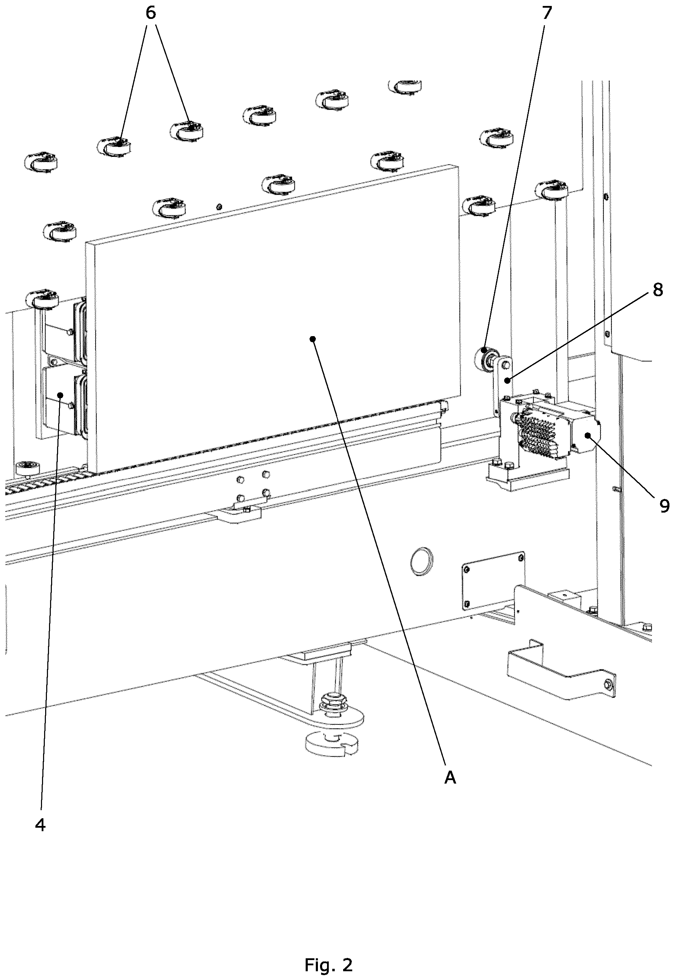

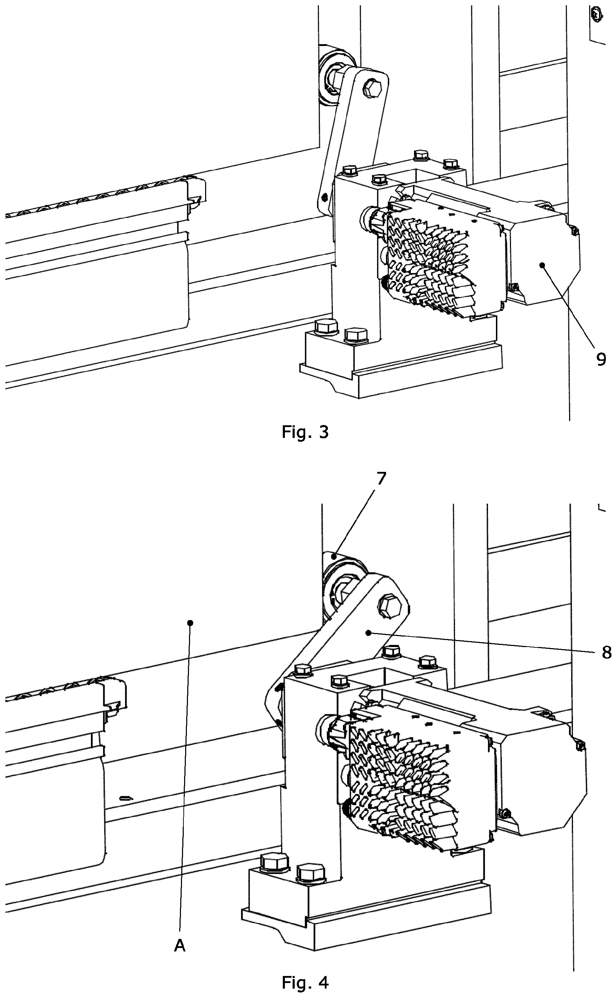

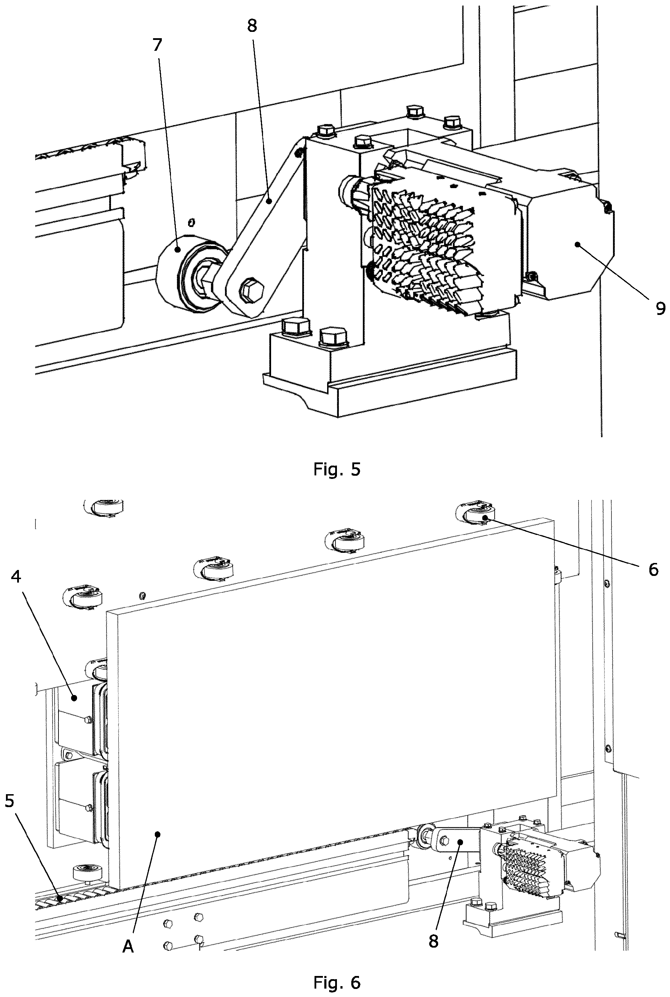

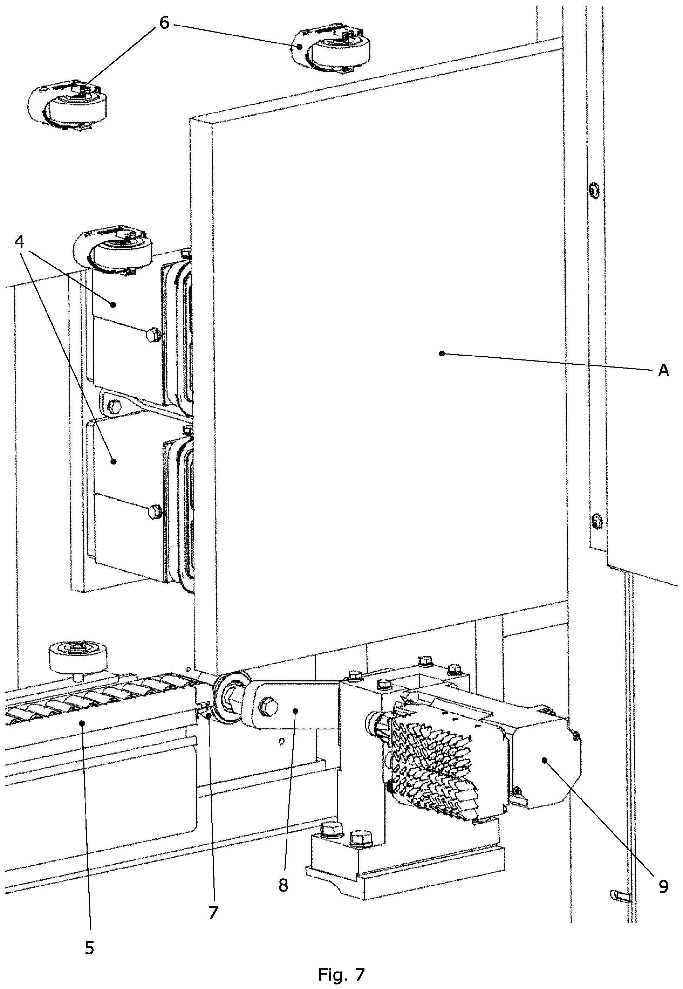

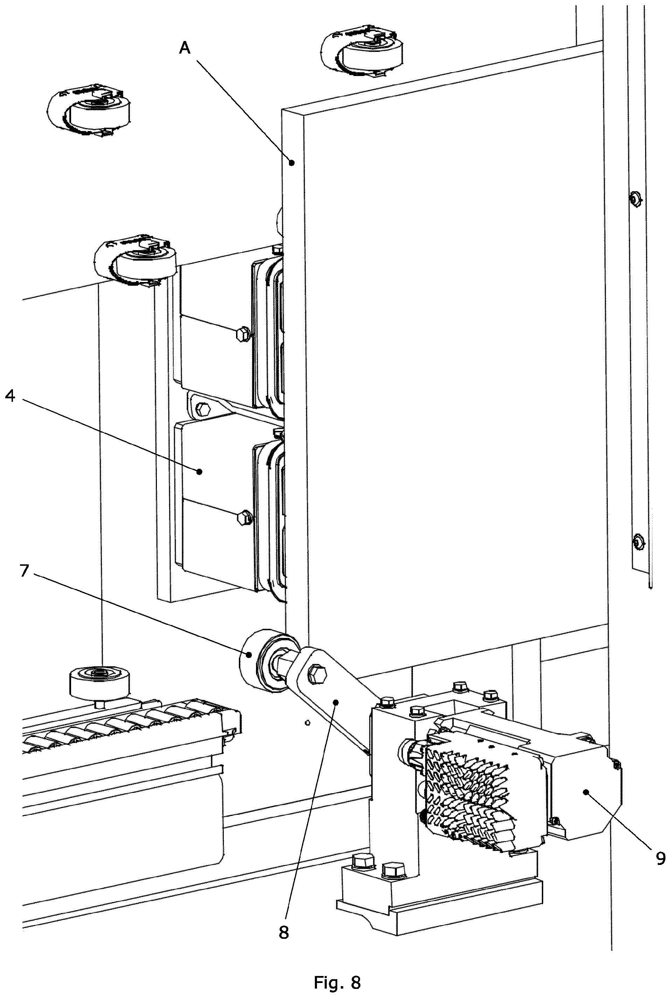

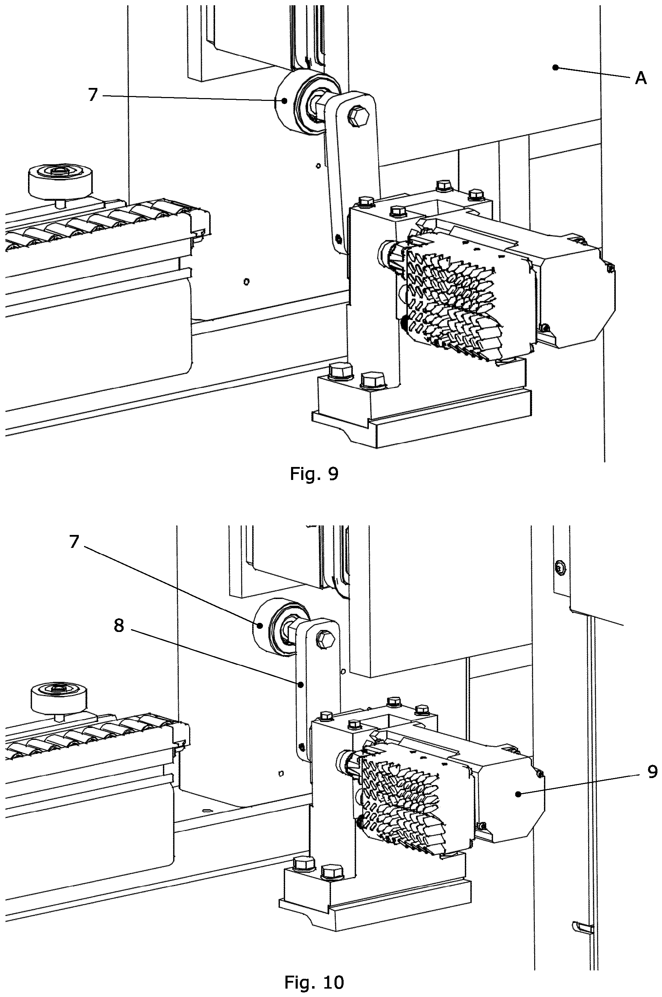

With reference to the illustrated first embodiment (Figures 2-10), Figure 2 shows the moving slab A moved by the conveyor 4 before meeting the mechanical feeler 7, with the slab-detection unit in the waiting configuration; in Figure 3 the front edge of the slab A has already met the mechanical feeler 7 and the arm 8 has already started to rotate, whereas in Figure 4 the slab A has continued to advance with the mechanical feeler 7 still in contact with the front edge and the arm 8 has continued to rotate; in Figure 5 the servo motor 9 is rotating the arm 8 to bring the mechanical feeler 7 into contact with the lower edge of the slab A; Figure 6 shows the mechanical feeler 7 that has made contact with the lower edge of the slab A whilst the slab continues to advance; in Figure 7 the mechanical feeler 7 is still in contact with the lower edge of the slab A (it is near the rear lower corner) and the slab has continued to advance; in Figure 8 the servo motor 9 is rotating the arm 8 to obtain and then maintain the contact of the mechanical feeler 7 against the rear edge of the slab A that continues to advance; in Figure 9 the mechanical feeler 7 is still in contact with the rear edge of the slab that continues to advance, whereas in Figure 10 the slab A, continuing to advance, has abandoned the mechanical feeler 7 that has returned to the waiting configuration of the slab-detection unit.

The second illustrated embodiment (with reference to Figures 11-15) is a machining method for a slab A with a non-rectangular profile (in particular, with at least one curvilinear side and/or at least one oblique rectilinear side) in a machining centre 1 with a fixed detection unit G and a movable detection unit H. The fixed detection unit G and the movable detection unit H may be made, in particular, like the slab-detection unit disclosed previously.

Figure 11 shows the steps in sequence of (01) to (08) of the machining method, with the continuously advancing slab A, in which: the slab A approaches the fixed detection unit G (step (01)); the front edge of the slab A meets the mechanical feeler of the fixed detection unit G (step (02)); the slab A continues advancing to contact the mechanical feeler of the fixed detection unit G (step (03)); the mechanical feeler of the fixed detection unit G detaches from the front edge and the feeler arm of the fixed detection unit G is rotated by the respective servo drive (steps (04), (05), (06)); the mechanical feeler of the fixed detection unit G comes into contact with the lower edge of the slab (step (07)); the front edge of the slab A meets the mechanical feeler of the movable detection unit H, whilst the mechanical feeler of the fixed detection unit G continues contact with the lower edge (step (08)); it is noted that the lower edge might not be detected completely, as in this specific case.

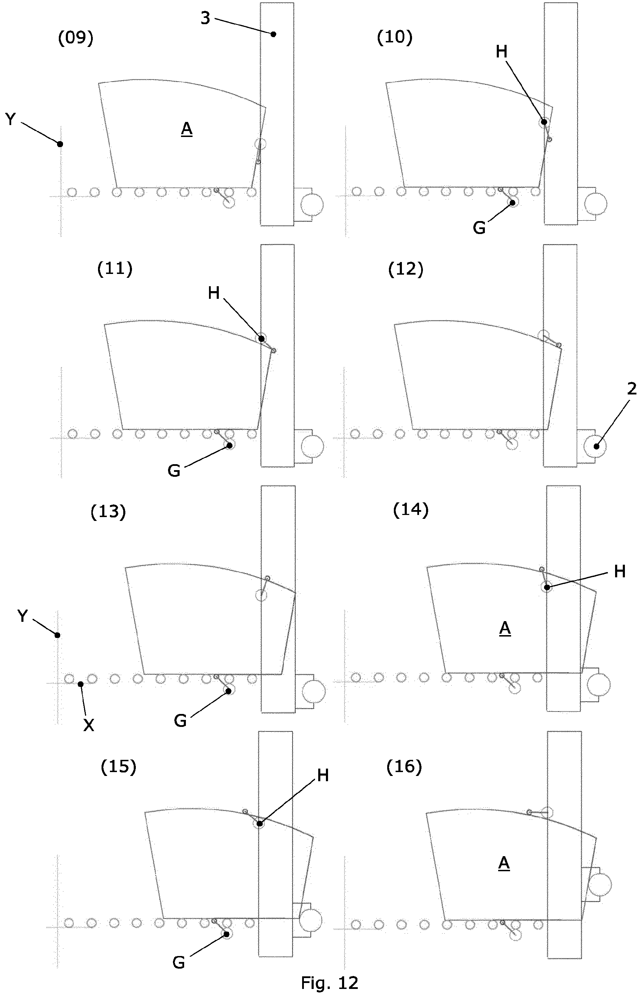

Figure 12 shows the steps in sequence of (09) to (16), still with the continuously advancing slab A, in which: the movable detection unit H is moved (in this embodiment, upwards) to follow the front edge of the slab A maintaining contact (steps (09), (10), (11)); the mechanical feeler of the movable detection unit H comes in contact with the upper edge (in the specific case, curvilinear) of the slab (steps (12) to (16)) whilst the conveying unit of the movable detection unit H performs movements (in the specific case, both upwards and downwards) to follow the upper edge of the slab A maintaining contact. The mechanical feeler of the fixed detection unit G continues contact with the lower edge, whilst the machining unit 2 (vertical grinding machine), having received the information on the position and shape of the front edge of the slab A, may start to machine the front edge (steps (15) and (16)).

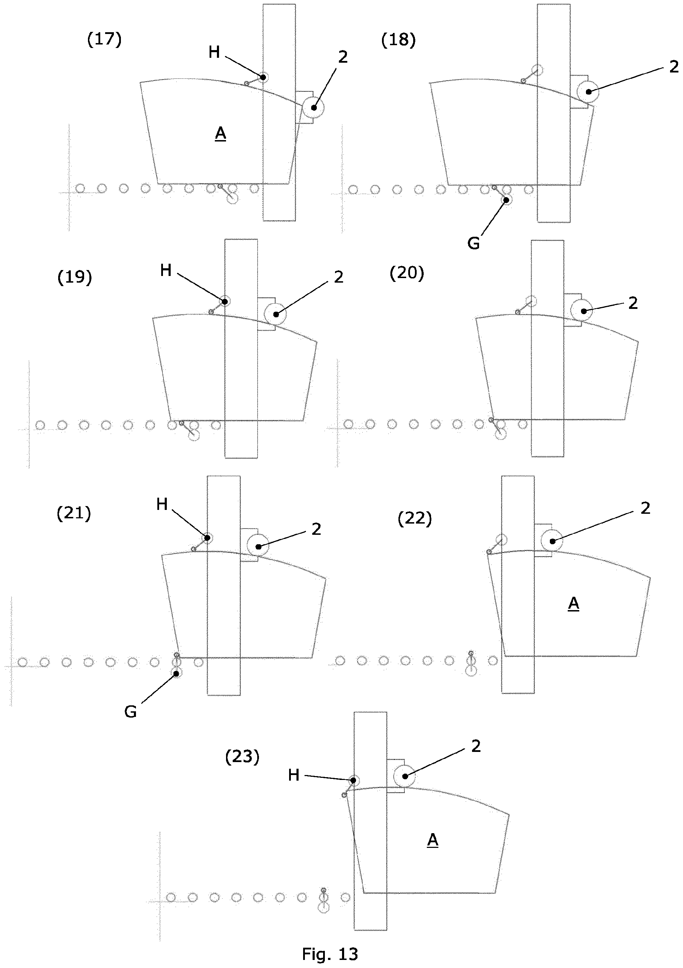

Figure 13 shows the steps in sequence of (17) to (23), in which: the movable detection unit H continues following in contact with the upper edge of the slab A, the machining unit 2 ends machining of the front edge and goes on to machine the upper edge of the slab A, whilst the mechanical feeler of the fixed detection unit G continues contact with the lower edge (steps (17), (18), (19)); the mechanical feeler of the fixed detection unit G detects the rear edge (steps (20) and (21)), then the slab A abandons the fixed detection unit G (step 22)); at a certain point (step (23)) also the movable detection unit H starts detecting the rear edge (in this case after the fixed detection unit G). The slab A may be moved (forwards or backwards) according to need on the basis of the shape of the slab A.

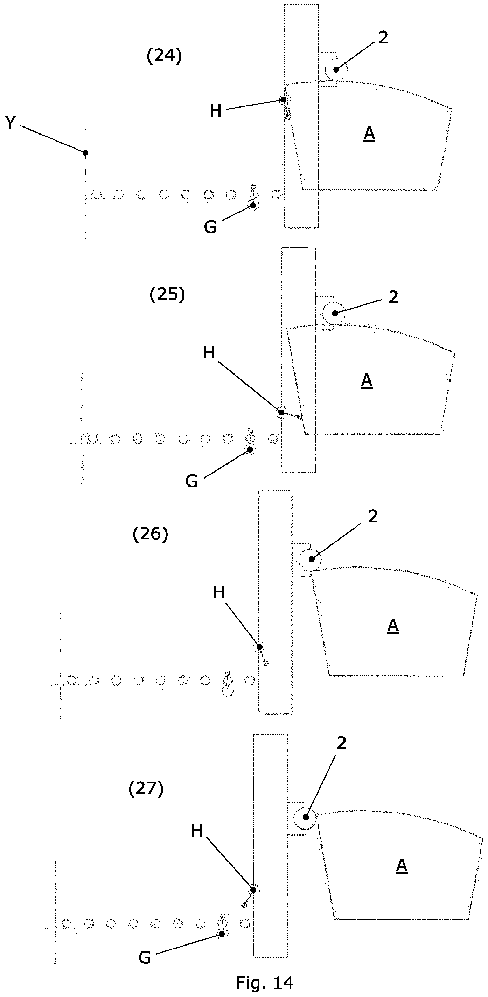

Figure 14 shows the steps in sequence of (24) to (27), in which: the movable detection unit H continues to detect the rear edge of the slab A (steps (24) and (25)); the machining unit 2 ends machining of the upper edge and starts machining the rear edge (steps (26) and (27)). It can be seen that the rear edge of the slab A might not be detected completely, as in this specific case.

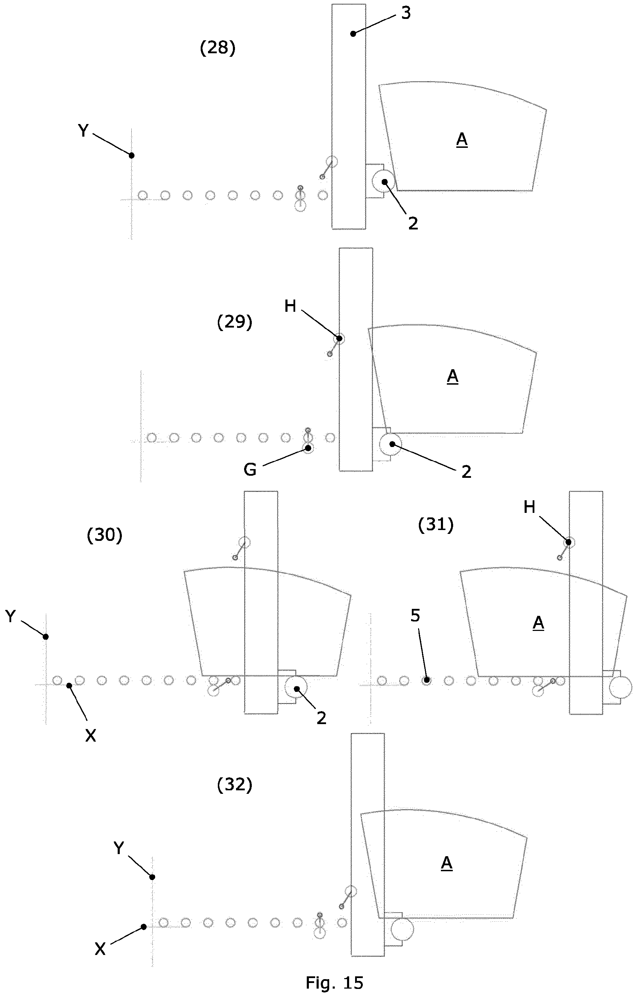

Figure 15 shows the steps (28) to (32) in sequence, in which the machining unit 2 ends machining of the rear edge and machines of the lower edge; it can be seen that the slab A may be conveyed by the conveyor 4 (always grasping the slab A firmly), especially in these steps, in a retracting direction to enable the edge to be machined on the entire perimeter of the slab. Lastly, the machined slab A is evacuated from the machining centre 1 (step (32)).

## Claims

1. Machining centre (1), comprising:
a machining unit (2) that is movable at least in a vertical direction (Y) and configured to perform a machining task on a slab (A);
- a path configured to move a slab arranged vertically in a horizontal direction (X) to said machining unit (2);
- a detection unit (G; H) comprising:
* a mechanical feeler (7) arranged along said path to come into contact with a slab (A) moving along said path;
* an arm (8) that carries said mechanical feeler (7) and that is rotatable around a rotation axis;
* a servo motor (9) with a rotor and a feedback sensor, said rotor being arranged to drive said arm (8);
* a servo drive for controlling said servo motor (9).

2. Machining centre according to claim 1, wherein said servo drive is configured to control said servo motor (9) so as to adopt a waiting configuration for waiting for a slab in which said mechanical feeler (7) carried by said arm (8) stays in place, said servo drive being configured to control the torque of said servo motor (9) so as not to exceed a predefined torque limit so that the slab (A), colliding against said mechanical feeler (7), can push and consequently move said mechanical feeler (7), thus rotating said arm (9), maintaining contact between the moving slab (A) and said mechanical feeler (7), with a limited contact force.

3. Machining centre according to claim 1 or 2, comprising a calculation unit configured to process signals received from said feedback sensor so as to determine at least one feature of the slab (A) in contact with said mechanical feeler (7), in particular a position of the slab.

4. Machining centre according to any one of the preceding claims, wherein said detection unit (H) is arranged on a conveying unit which can be moved along at least one machining axis controlled by a numerical control; said machining axis being, in particular, a vertical axis.

5. Machining centre according to claim 4, comprising two or more detection units (G; H) at least one of which is arranged on said conveying unit.

6. Machining centre according to any one of the preceding claims, wherein said machining unit (2) comprises a vertical grinder and/or wherein said machining unit (2) is movable along a fixed support (3) extending in a vertical direction and/or wherein said path is provided with a conveyor (4) capable of gripping a slab arranged vertically and moving the slab in a horizontal direction and/or wherein said path comprises a roller conveyor (5) to allow sliding of a slab (A) arranged vertically and resting on the roller conveyor (5) with its own lower edge and/or wherein said path comprises a plurality of rolling elements (6) arranged on a vertical plane for contact with a face of the slab arranged vertically.

7. Machining centre according to any one of the preceding claims, wherein said arm (8) is rotatable around said rotation axis with possibility of rotation equal to or greater than 360° in both directions of rotation.

8. Machining centre according to any one of the preceding claims, wherein said machining centre (1) comprises a numerical control configured to perform a machining method according to any one of the following claims.

9. Machining method, in particular for machining in a machining centre according to any one of the preceding claims, wherein a moving slab (A) meets a mechanical feeler (7) and pushes the mechanical feeler (7) while maintaining contact so as to rotate a revolving arm (8) on which the mechanical feeler is arranged, wherein the arm (8) is connected to a rotor of a servo motor (9) controlled by a servo drive, wherein a feedback sensor connected to said rotor sends signals which are used to detect at least one feature of the slab; said feature comprising, in particular, a position of the slab (A) with reference to a position of a machining unit (2).

10. Method according to claim 9, wherein, when the slab (A) meets the mechanical feeler (7), the slab is moved by a conveyor (4), in particular of the vacuum type, and the servo drive controls the servo motor (9) with a position control to keep the mechanical feeler (7) stationary waiting for the slab (A), and wherein the servo drive controls the servo motor (9) with a torque control so as not to exceed a set torque limit, so that, after the slab (A) has met the mechanical feeler (7), the slab continues movement in contact with the mechanical feeler and pushes the mechanical feeler (7) causing a rotation of the revolving arm (8) and of the rotor connected to the arm with a limited contact force, after which the signals of the feedback sensor supply a plurality of angular position values of the rotor that are used, knowing the conformation and arrangement of the arm (8) and of the mechanical feeler (7), to determine a position and/or profile of a front edge of the slab, where "front" is understood to refer to a direction of advance of the slab (A), in particular by means of a regression analysis.

11. Method according to claim 10, wherein, for determining the profile of the front edge of the slab (A), angular position values of the rotor are used after the rotor has performed a given rotation.

12. Method according to any one of claims 9 to 11, wherein the arm (8) is rotated by the servo drive until the mechanical feeler (7) contacts a lower edge of the slab (8) to determine a position and/or profile of the lower edge based on signals from the feedback sensor.

13. Method according to any one of claims 9 to 12, wherein the mechanical feeler (7), the revolving arm (8) and the servo motor (9) are components of a detection unit (H) arranged on a conveying unit moved along at least one machining axis controlled during the contact between the slab and the mechanical feeler.

14. Method according to claim 13, wherein said conveying unit is so moved that the mechanical feeler (7) comes into contact with the front edge and/or with the upper edge and/or with the rear edge and/or with the lower edge of the slab.

15. Method for machining in a machining centre, in particular according to any one of claims 9 to 14, in which a quality control of a slab (A) processed in the machining centre (1) comprises the following steps: feeding a raw slab conveyor (4), removing material from the edges of said raw slab by means of a machining unit (2) to obtain a machined slab, moving the machined slab, in particular making it go backwards still engaged by the conveyor (4), detecting an actual profile of the machined slab by means of a detection unit (G; H) with a mechanical feeler (7) arranged on a revolving arm (8) connected to a rotor of a servo motor (9) controlled by a servo drive using signals sent by a feedback sensor connected to said rotor.

16. Method for machining in a machining centre, in particular according to any one of claims 9 to 15, in which a calibration of the machining centre (1) comprises the following steps: defining a slab shape, feeding a raw slab conveyor (4) with excess material on the edges with respect to said slab shape, removing material from the edges of said raw slab by means of a machining unit (2) to obtain a machined slab of known dimensions, moving the machined slab, in particular making it go backwards still engaged by the conveyor (4), detecting the machined slab, in particular two edges of the slab, by means of a detection unit (G; H) with a mechanical feeler (7) arranged on a revolving arm (8) connected to a rotor of a servo motor (9) controlled by a servo drive using signals sent by a feedback sensor connected to said rotor, determining an actual position of the machining unit (2) by knowing the relative position between the detection unit (G; H) and the machining unit (2).
